# EUROPEAN PATENT SPECIFICATION

(11) **EP 4 385 145 B1**
(45) Date of publication and mention of the grant of the patent: **05.03.2025**
(21) Application number: 22786426.1
(22) Date of filing: 11.08.2022
(51) Int. Cl.: H04B 7/06, H04L 7/00, H04W 56/00

(54) **DECODING UNIT FOR TELECOMMUNICATION SYSTEMS AND TELECOMMUNICATION SYSTEM COMPRISING SUCH DECODING UNIT**
DEKODIERUNGSEINHEIT FÜR TELEKOMMUNIKATIONSSYSTEME UND TELEKOMMUNIKATIONSSYSTEM MIT EINER SOLCHEN DEKODIERUNGSEINHEIT
UNITÉ DE DÉCODAGE POUR SYSTÈMES DE TÉLÉCOMMUNICATIONS ET SYSTÈME DE TÉLÉCOMMUNICATIONS COMPRENANT UNE TELLE UNITÉ DE DÉCODAGE

(30) Priority: 13.08.2021 IT 202100021881
(43) Date of publication of application: 19.06.2024
(73) Proprietor: Adant Technologies Inc., Wilmington, DE 19808 (US)
(72) Inventor: PIAZZA, Daniele, Padova 35128 (IT); BERSAN, Riccardo, Castagnaro 37043 (IT)
(74) Representative: Pelanda, Paolo
(86) International application number: PCT/IB2022/057514
(87) International publication number: WO 2023/017463

(56) References cited:
- KR-B1- 102 184 513
- US-A1- 2002 057 664
- WANG DAN ET AL: "A Novel PSS Timing Synchronization Algorithm for Cell Search in 5G NR System", IEEE ACCESS, IEEE, USA, vol. 9, 1 January 2021 (2021-01-01), pages 5870 - 5880, XP011830671, DOI: 10.1109/ACCESS.2020.3048692

## Description

### Field of application of the invention

The present invention concerns the technical field of telecommunications and the subject of the invention is a decoder unit for telecommunication systems.

Moreover, a further subject of the present invention concerns a telecommunication system comprising the aforementioned decoder unit.

### State of the art

As is known, in modern telecommunication systems it is necessary to exchange a considerable amount of data with users connected to an interconnected network of radio base stations.

More specifically, the device associated with the user (commonly referred to as *user equipment* or "UE") is constituted by a smartphone, tablet, computer or laptop, smartwatch or any other similar device.

In practice, these systems use a plurality of antennas designed to dynamically vary the radiation pattern depending on the conditions of the transmission channel and/or the requirements of the architecture on which the telecommunications system is based.

More specifically, these antennas are associated with both the radio base station and the UE device.

Reconfigurable antennas are therefore antennas systems suited to dynamically varying the radiation pattern of the antenna (or *beam pattern*) or its polarization.

Reconfigurable antennas can be used in cellular communications (LTE, 4G, 5G NR FR1, 5G NR FR2 and other similar standards) to improve the connectivity of an EU user equipment with a radio base station or repeater.

The typical configuration of these communication systems also includes, in addition to the antennas, one or more RF devices called *front-end devices* and suited to provide a digital signal to all the blocks located downstream of the radio chain. Radio front-ends typically comprise filters, amplifiers, up/down converters, and digital/analogue converters.

Typically, the first block positioned downstream of the RF section is a modem configured to process the information associated with the digital signal coming from the antennas and decode a plurality of data sets necessary to ensure the maintenance and stability of transmission/reception between the UE equipment and the radio base station/s.

These modems are generally of the type available on the market and their operation is controlled by protocol standards, algorithms and programming sequences which are defined and maintained by the manufacturer of the equipment.

By accessing specific information contained in the signals decoded by the modem, such as the power, module or phase of the signal received by the radio base station, it is possible to define algorithms for controlling the radiation pattern of the antennas associated with the UE device.

Another use of the information which can be extracted by the modem and which is derived from the signal received from the antennas lies in the determination of the position of the UE device with respect to the position of the radio base stations belonging to the telecommunications system.

The reconfigurable antennas used in UE user equipment require access to parameters associated with the wireless connection for the purpose of determining, through the algorithms contained in the modem, the optimal radiation pattern to be selected.

To do this, the modem can decode the entire data frame received (or a part of it).

The information retrieved in this way by the modem is then made available to a processing unit (which may be integral with the modem, or external to it) that is suited to determine the optimal radiation pattern of the antenna associated with the UE equipment during communication between the former and a given radio base station.

These telecommunications systems require the use of a modem that must be able to "dialogue" with the processing unit of the radio chain in order to exchange with the latter information and parameters suited to define the selection of the pattern of the antennas (for example, information related to received power, CSI, etc.).

Consequently, the main drawback of these telecommunications systems lies in that the hardware/software portions designed to handle these processes must be developed in close symbiosis with the modems which, as already mentioned above, can vary considerably depending on the manufacturer of these equipment.

It is therefore evident that the development of the equipment suited to promote the control of the operation of the antennas or to be used for the geolocation of the UE is rather limited and complex due to this strong dependence on the characteristics of the various types of modems.

Furthermore, these equipment are rather expensive and their being dependent on "external" protocols, that is, protocols defined and managed by modem manufacturers, severely limits the flexibility of the entire radio chain, making it necessary to develop differentiated product lines depending on the modem manufacturer selected for any specific radio chain.
KR102184513, US2002/057664 and the technical publication "A Novel PSS Timing Synchronization Algorithm for Cell Search in 5G NR System" - IEEE ACCESS, IEEE, USA, vol. 9, 01.01.2021 describe respective decoder units for telecommunications systems having all the above-mentioned drawbacks.

### Presentation of the invention

The present invention intends to overcome the technical drawbacks described above by providing a particularly efficient and high-performance decoder unit for telecommunications systems.

More specifically, the main object of the present invention is to provide a decoder unit for telecommunications systems which is essentially universal, meaning that its use is not affected by the type of construction of the other components of the system.

It is a further object of the present invention to provide a decoder unit for telecommunications systems that is easy to construct.

It is another object of the present invention to provide a particularly economic and reliable decoder unit for telecommunications systems.

It is a further object of the present invention to provide a decoder unit for telecommunications systems that is particularly flexible and can be easily adapted to any type of system.

It is another object of the present invention to provide a decoder unit that can be easily installed on or removed from already functioning telecommunications systems for the purpose of *upgrading* them.

These objects, together with others that will be better clarified below, are achieved by a decoder unit for telecommunications systems of the type according to claim 1.

Other objects that are described in greater detail below are achieved by a decoder unit for telecommunications systems according to the dependent claims.

According to a further aspect of the present invention, the same concerns also a telecommunications system of the type according to claim 10.

### Brief description of the drawings

The advantages and characteristics of the present invention are clearly illustrated in the following detailed description of some preferred but not limiting configurations of a decoder unit for telecommunications systems with special reference to the following drawings:
- **Figure 1** shows a block diagram of a telecommunications system equipped with reconfigurable antennas (smart antennas);
- **Figure 2** shows a simplified block diagram of a decoder unit for a telecommunications system according to the invention;
- **Figure 3, Figure 4****,** **Figure 5** and **Figure 6** show respective block diagrams of telecommunications systems equipped with a decoder unit according to the invention;
- **Figure 7** shows a block diagram of a telecommunications system equipped with a decoder unit according to the invention and suited to promote the control of the electrical characteristics of an antenna;
- **Figure 8** shows a block diagram of a telecommunications system equipped with a decoder unit according to the invention and capable of geolocating a mobile device associated with a user.

### Detailed description of the invention

The present invention concerns a decoder unit suited to be installed in cellular telecommunications systems of the latest generation.

More specifically, the decoder unit that is the subject of the present invention, and indicated by the reference number **1** here below, can be installed in telecommunications systems of type LTE, 4G, 5G NR FR1/FR2, etc.

The decoder unit **1** will be installed in systems suited to enable radio communication between a transceiver antenna **2** (for example, associated with a radio base station) and a piece of equipment associated with the user, indicated by the acronym **UE** (user equipment) here below.

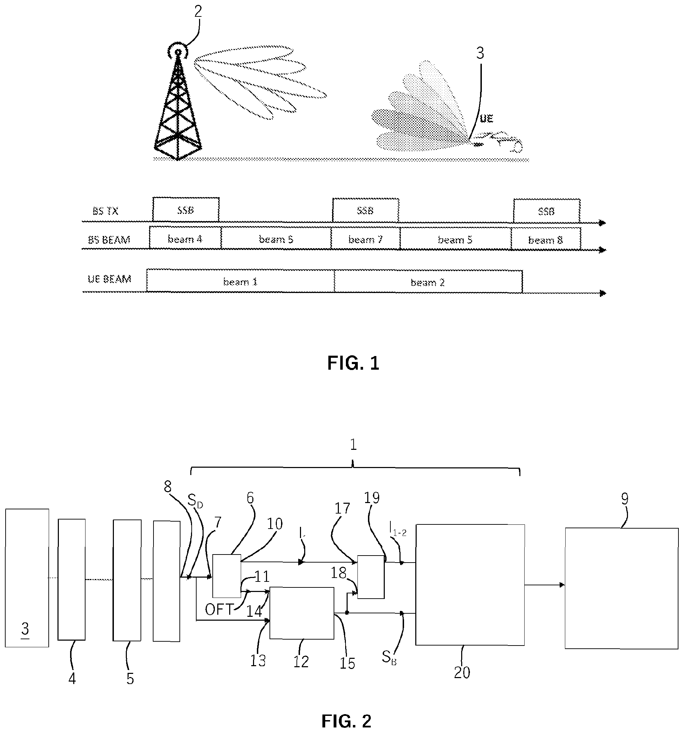

This configuration is illustrated by way of example in the diagram shown in **Figure 1****.**

Furthermore, the decoder unit **1** that is the subject of the present invention can be installed in systems equipped with antennas **2, 3** of the reconfigurable type, that is, antennas **2, 3** for which it is possible to control the radiation pattern to be used at a precise time instant by selecting it from a set of possible configurations defined during the design phase.

Alternatively, the decoder unit **1** that is the subject of the present invention can be installed in systems equipped with two or more antennas **2, 3** each of which has a corresponding fixed and predetermined radiation pattern.

In the example illustrated in **Figure 1****,** the antennas **2** associated with the radio base station (BS) can operate with different radiation patterns, the selection of the optimal radiation pattern can be made in predetermined time slots, as indicated in the second line of the figure (slot 1 is associated with pattern no.4, slot 2 with pattern no. 5, slot 3 with pattern no. 7, etc.).

A similar selection mechanism can be reproduced also on the UE, in the case where said device is equipped with reconfigurable antennas **3.**

In this case, the selection is indicated in the third line below the figure, where, as far as the UE is concerned, time slot 1 is associated with pattern no.1 while time slot 2 is associated with pattern no. 2.

The selection of the radiation patterns associated with the radio base antennas **2** and/or the UE antennas **3** is managed by an electronic control unit (not illustrated in the Figures) and is based on the choice of the configuration that makes it possible to optimize the instantaneous characteristics of the transmission channel.

By selecting the radiation patterns associated with the antennas **2, 3,** it will then be possible to optimize the transmission and reception of the data frames exchanged between the UE and the radio base station.

Conveniently, the telecommunications systems of this type are governed by international standards that define how and what type of data must be exchanged between radio base stations and UEs.

In particular, a specific synchronization signal SSB (Synchronization Signal Block) must be transmitted, which comprises two different sub-signals: a primary synchronization signal (PSS) and a secondary synchronization signal (SSS).

The characteristics and data frames of said signals (SSB / PSS / SSS) are defined by the standards according to the domain type to which the communication belongs (LTE, 4G or 5G).

The SSB, PSS and SSS signals are generally transmitted by the radio base station, which is why the structure of said signals is known in advance, and their purpose is to carry information relating to the characteristic parameters of the wireless connection that makes it possible to place the radio base station in communication with all the UEs.

Furthermore, the information contained in the primary synchronization signal PSS and in the secondary synchronization signal SSS can be used as a mathematical metric capable of providing information on the transmission quality.

These signals, in fact, can be particularly useful when it is necessary to establish the quality of the radiation pattern used at a given time instant by the antennas **2** of the radio base station and by the antennas associated with the UE.

Furthermore, the primary and secondary synchronization signals can be used to univocally identify the radio base station that transmitted the signal received by the UE equipment with respect to one or more radio base stations. This information can subsequently be used by the geolocation (or geographic localization) algorithms of the UE equipment with respect to one or more radio base stations.

The decoder unit that is the subject of the invention can be used to decode the primary and secondary synchronization signals for the purpose of obtaining the information required for selecting the best radiation pattern of the antennas (generally the antennas associated with the UE but in an alternative version of the invention the radiation pattern may also be selected with reference to the antennas associated with the radio base station and/or the UE side).

Alternatively, the decoding of the primary and secondary synchronization signals can provide useful information for the geolocation of the position of one or more UEs with respect to one (or more) radio base antennas.

As is explained in greater detail below, the present invention makes it possible to control the radiation pattern associated with the antennas of the radio base station **2** or with the antennas **3** associated with the UE, or to geolocate the latter by means of a decoder unit. In the examples schematically shown in the Figures, the device **1** that is the subject of the present invention is integrated in the UE.

In addition to the above, the decoder unit **1** described herein is particularly simple to construct and suited to be easily inserted both in the radio chains of new telecommunications systems and in the radio chains of already functioning telecommunications systems in such a way as to upgrade them.

The diagram shown in **Figure 2** illustrates a generic version of the decoder unit **1** according to the invention applied to a UE equipment.

The antennas **3** of the UE equipment are connected to an analogue block **4** suited to condition the frequency and/or amplitude of the signal **s_{A}** received/emitted by the same antennas **3.**

An analogue/digital converter - ADC **5** suited to convert the output signal **s_{A}** of the analogue block into a digital (that is, discrete) signal **s_{D}** can be arranged downstream of said block **4.**

Thus, at the output of the ADC block a modulated digital signal **s_{D}** is available, that is, a signal whose information is affected by the transformations carried out by a modulator block placed upstream of the transmitting antenna **2.**

More specifically, the decoder unit **1** that is the subject of the invention comprises a first decoder block **6** located downstream of the antennas **3.**

In particular, the first decoder block **6** may have an input **7** placed downstream of the antennas **3** and operatively associated with the latter; more precisely, the input of said first block can be connected to the output **8** of the ADC converter.

In this way, it will be possible to apply the modulated digital signal **s_{D}** originating from the antennas **3** to the input **7** of the first decoder block **5.**

The first decoder block **6** serves the function of generating first information **I₁** associated with the primary synchronization signal PSS.

In other words, the first decoder block **6** is suited to process the modulated signal **s_{D}** originating from the ADC in such a way as to extract the digital information **I₁** (or data frames) associated with the primary synchronization signal.

The first decoder block **6** is configured to promote the cyclic comparison (or cyclic correlation) of the modulated digital signal **s_{D}** applied to its input **7** with a numerical sequence included in a first set **NS₁.**

In the context of the present invention, the expressions "comparison between signals" or "correlation between signals" refer to the same type of activity, that is, the comparison of a digital signal subjected to evaluation (in this case the input signal to the first block) with a digital signal constituted by a predetermined frame.

When the input signal **7** to the first block **6** has a form and numerical characteristics substantially equal to those of the reference signal, the outcome of said comparison (or correlation) is positive.

In this specific case, the first block **6** is suited to promote the comparison between the single signal applied to the input **7** (the modulated digital signal **s_{D}** originating from the antennas **3**) and the information associated with a plurality of reference signals contained in a first set **NS₁.**

More specifically, the first set **NS₁** can comprise three reference signal sequences selected in accordance with the particular LTE standard associated with the telecommunications system.

The term "signal sequence" used in this description is intended as referred to a predetermined digital frame and associated with a specific digital signal present in the radio chain of an LTE system.

The number and definition of the signal sequences that are included in the first set **NS₁** can be selected in such a way as to comply with the communication standards currently in use or to be developed in the future, among which the following cases can be mentioned:
- with reference to PSS NR (5G), the reference sequences are of the *m-Sequence* type;
- with reference to PSS LTE, the reference sequences are of the *Zadoff-chu* type;
- with reference to the 38.211 NR standard, the reference sequences are of the type indicated in *Physical channels and modulation (Release 15).*

Conveniently, the reference sequences associated with the first set **NS₁** can vary over time and comply even with definitions imposed by future communication standards.

However, at present, the primary synchronization signal can have three signal sequences defined by the standard.

Conveniently, the first decoder block **6** can be set up in such a way as to generate a time offset **OFT** when the comparison made between the modulated digital signal **s_{D}** applied to the input **7** and one of the three reference sequences of the first set **NS₁** is positive.

Specifically, the modulated signal **s_{D}** present at the input of the first decoder block **6** (originating from the antennas **3**) is cyclically compared with all the reference sequences of the first set **NS₁.**

With each comparison it is possible to generate a correlation index **C_{R}** whose value is included between 0.00 (no correlation) and 1.00 (perfect correlation).

To determine the reference sequence that generates a positive comparison (and thus corresponds to the one received at that instant from the antennas 3), it is sufficient to identify the correlation index **C_{R}** with the highest value among all the **C_{R}** indices calculated during the cyclic comparison.

The sequence associated with the correlation index **C_{R}** having the highest value in fact represents the sequence (among the three available sequences) that at that time instant is associated with the modulated signal received from the antennas **3.**

The cyclic comparison between the digital signal **s_{D}** applied to the input **7** of the first block 6 and each reference sequence can have a predetermined duration.

For example, the comparison between the modulated digital signal **s_{D}** present at the input **7** of the first block **6** and each respective signal sequence can be performed with a constant duration (that is, the same duration for all the signals contained in the first set **NS₁**) or, alternatively, one or more of said comparisons can have a duration different from the duration associated with the other comparisons.

The time instant of the *matching* between the digital signal **s_{D}** present at the input **7** of the first block **6** and a signal of the reference sequence contained in the first set **NS₁** (expressed by the value of the correlation index **C_{R}**) is identified as a time offset **OFT.**

The signal associated with the time offset **OFT** can be stored in the first decoder block **6** or, alternatively, by an external processing unit **9,** as is better described further on in the present description.

As better illustrated in the block diagram shown in **Figure 2****,** the first decoder block **6** can comprise one pair of outputs **10, 11.**

On one of said outputs **10** the information **I₁** associated with the reference sequence can be available, expressed as the value of the correlation index **C_{R}** and obtained as a result of the comparison made by the first block **6** with the modulated digital signal **s_{D}** present at the input **7** of the same block **6.**

In other words, the correlation index C_{R} suited to generate a positive comparison will be available at said output **10**; however, the first decoder block **6** (or any external processing unit **9**) will be able to retrieve also the information associated with the reference signal that generated said correlation index **C_{R}.**

The other output **11** of the first block **6,** instead, can provide a signal associated with the time offset **OFT,** that is, a signal containing information related to the instant when the comparison made by the first block had a positive outcome.

Conveniently, the decoder unit **1** comprises a demodulator **12** operatively connected to the antennas **3** and suited to promote the demodulation of the signal **s_{D}** coming from the latter.

In particular, the demodulator **12** can be positioned downstream of the first decoder block **6.**

As better illustrated in the block diagram shown in **Figure 2****,** the demodulator **12** can include an input **13** operatively connected to the output **8** of the ADC (analogue/digital converter) block **5.**

Typically, the demodulator block **12** can be of the OFDM type or a similar type, since this modulation standard is the one most commonly used in telecommunications systems.

The demodulator block **12** can comprise also a second input **14** which is operatively connected to the first decoder block **6** and in which the time offset **OFT** signal extracted during the comparison with positive outcome is available.

The demodulator block **12** has also a single output **15** associated with a demodulated digital signal **s_{B}** containing the information received from the antennas **3.**

In this way, the digital signal coming from the antennas **3** is subjected to a demodulation process which is parameterized over time by the offset signal **OFT.**

In particular, the demodulator block **12** starts demodulating the signal **s_{D}** originating from the antennas **3** only starting from the time instant corresponding to that associated with the offset signal **OFT.**

In this way, there is substantial temporal synchrony between the instant in which the reference string associated with the primary synchronization signal PSS is identified and the instant in which the demodulator block **12** begins to demodulate the signal **s_{D}** originating from the antennas **3.**

The demodulated digital signal **s_{B}** correlated over time with the offset signal OFT coming from the first decoder block **6** is present at the single output **15** of the modulator block **12.**

Conveniently, the unit **1** comprises a second decoder block **16.**

The second decoder block **16** is positioned downstream of the first decoder block **6** and of the demodulator block **12.**

In particular, the second decoder block **16** comprises one pair of inputs **17, 18**: the first of said inputs **17** is operatively connected to the first decoder block **6** while the second input **18** is connected to the output **15** of the demodulator block **12.**

In other words, the digital signal sequence that was selected during the comparison with positive outcome at the level of the first decoder block **6** is applied to one of said inputs **17.**

The signal s_{B} demodulated by the demodulator block **12** and originating directly from the antennas **3,** instead, is applied to the other input **17** of said block **16.**

The second decoder block **16** is configured to process said two signals present at the respective inputs **17, 18** so as to transmit, at its single output **19,** a signal containing information **I₂** to the secondary synchronization signal SSS.

Thus, the second decoder block **16** is suited to promote the cyclic comparison (or cyclic correlation) of the demodulated digital signal s_{B} applied to one of its inputs **18** with a plurality of digital signal sequences included in a second set **NS₂.**

Analogously to what has already been described above with reference to the first decoder block **6,** the expressions "comparison between signals" or "correlation between signals" are intended to refer to the same type of activity, that is, the comparison of a digital signal subjected to evaluation (in this case the input signal to the first block) with a digital signal constituted by a predetermined frame.

When the demodulated signal s_{B} applied to the input **18** of the second block **16** has a form and numerical characteristics substantially equal to those of the reference signal contained in the second set **NS₂,** the outcome of said comparison (or correlation) is positive.

In particular, the second set **NS₂** can comprise a predetermined number of reference signal sequences selected in accordance with the specific LTE standard associated with the telecommunications system.

The term "signal sequence" used in the present description is intended to refer to a predetermined digital frame and associated with a specific digital signal present in the radio chain of an LTE system.

The number and definition of the signal sequences included in the second set **NS₂** can be selected in such a way as to comply with the communication standards currently in use or to be developed in the future, among which the following cases can be mentioned:
- 5GNR *formula 7.4.2.2.1* of document 38.211 NR; *Physical channels and modulation (Release 15);*
- LTE *formula 6.11.2.1.*

Conveniently, the reference sequences associated with the second set **NS₂** can vary over time and comply even with definitions imposed by future communication standards.

However, at present, the secondary synchronization signal SSS can have three hundred and thirty-six (no. 336) signal sequences defined by the standard.

In a first version of the decoder unit **1,** the information **I₂** available at the output **19** of the second block **16** can be associated exclusively with the secondary synchronization signal SSS of the telecommunications system.

In other words, the information associated with the specific signal sequence of the second set **NS₂** (among the three hundred and thirty-six sequences defined by the standard) contained in the demodulated signal s_{B} actually received at that time instant from the antennas **3** (that is, the sequence contained in the second set that enables *matching* with the signal **s_{A}** actually received from the antennas **3**) can be retrieved at the output **19** of the second block **16.**

Alternatively, the set of information associated with both the synchronization signals of the system, the primary synchronization signal PSS and the secondary synchronization signal SSS, can be available as an output at the second block **16.**

Conveniently, the decoder unit **1** according to the invention may comprise a CPU **9** suited to process the first information **I₁** and the second information **I₂** generated by the first decoder block **6** and the second decoder block **16.**

The result of this processing will make it possible to obtain digital output data **D_{OUT}** to be used by the CPU **9** itself (or by an additional CPU external to the unit) to control and vary the dynamic behaviour of the antennas **3** or to determine the portion of the mobile equipment UE with respect to a radio base antenna of the communication system.

The unit that is the subject of the present invention can comprise also an optional block **20** positioned downstream of the first decoder block **6** and of the second decoder block **16.**

This block **20** can be configured to extract some useful parameters from the signal **s_{A}** received from the antennas **3** as it makes it possible to decode the portion of the synchronization signal SSB called the PBCH (*Physical Broadcast channel*).

Two pieces of information are in fact associated with the PBCH portion:
- the DM-RS (*DeModulation Reference Signal*) which can be used to evaluate the channel and assess its signal-to-noise ratio;
- the BCH (*Broadcast channel*) which contains a message (MIB; *Master Information Block*) with information associated with the characteristics of the radio base station (for example, sub-carrier spacing or SSB block index).

Conveniently, the decoder unit **1** that is the subject of the present invention can be used in a radio chain **21** provided with a plurality of devices, one of which is a standard modem **22** suited to extract a plurality of control information from the signal coming from the antennas **3.**

More specifically, a further subject of the present invention concerns a telecommunications system comprising at least one transmitting station (not illustrated in the Figures), one or more mobile devices associated with one or more users and of the type described above. Each mobile device includes one or more antennas suited to transmit/receive an electromagnetic signal containing information associated with data synchronization (SSB), a converter device suited to convert the analogue signal received by the antennas into a digital modulated signal, a modem suited to decode the digital signal coming from the converter into a plurality of digital data sets, at least one decoder unit operatively connected to the digital modulated signal coming from the converter device and a CPU operatively connected to the converter device, the decoder unit and possibly the modem.

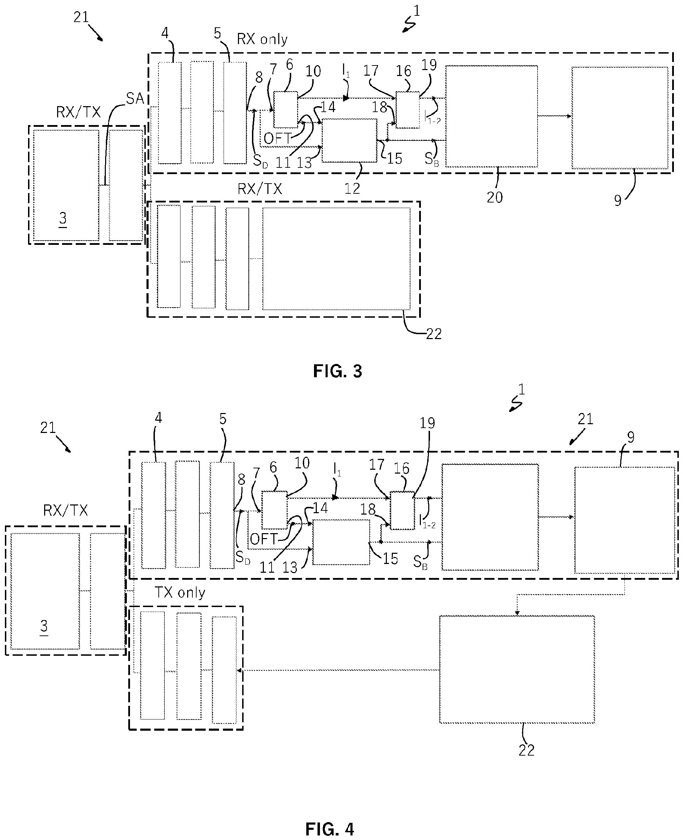

**Figure 3** shows a portion of the telecommunications system that is the subject of the present invention; in particular, it is possible to observe a first configuration of a radio chain **21** in which the analogue signal **s_{A}** received from the antennas **3** is first divided by means of the signal divider block and then applied to two respective branches connected to each other in parallel.

This radio chain operates according to the frequency division mode and for this reason the band of the transmitted signal is separate from and not superimposed on the band of the received signal.

In the first branch the decoder unit **1,** the optional block **20** and the CPU **9** are connected in series.

The function of the first branch is to extract the information **I₁₋₂** described above from the synchronization signal SSB.

To do this, the decoder unit **1** acts exclusively on the signal received from the antennas **3.**

The second branch, instead, is constituted by the standard modem **22** which is suited to perform a plurality of predetermined processing operations on the signal **s_{A}** received from the antennas **3.**

The modem **22** associated with the second branch can be configured to promote the treatment and processing of the signal received from the antennas **3** and/or the signal transmitted by the antennas **3.**

In the configuration illustrated in **Figure 3****,** the modem **22** is of the FDD (frequency division diplexing) type, that is, capable of providing an analogue radio frequency signal at its output.

The output/input of modem **22** can be directly connected to an analogue/digital conversion block and vice versa (ADC/DAC block).

Furthermore, said ADC/DAC block can be directly connected to a block suited to raise, or respectively lowering, the frequency of the signal originating from the modem **22,** or respectively from the antennas **3.**

Furthermore, said block can in turn be directly connected to an amplifier and/or filter block positioned directly downstream of the signal divider block.

An alternative configuration of the radio chain **21** is, however, visible in **Figure 4****.**

In this case, in the radio chain **21** the decoder unit **1,** the additional block **20,** the CPU **9** and the standard modem **22** are respectively connected in series.

In this case, the first branch of the chain (to which the decoder unit **1** is connected) operates exclusively on the signal received by the antennas, while the second branch (to which the modem **22** is connected) operates exclusively on the signal transmitted by the antennas **3.**

The modem **22** can be of the FDD type, even if in this case the modem is equipped with an I/Q port, that is, a port capable of receiving and providing only digital output/ input signals.

For this reason, the analogue output signal from the antennas **3** is first converted into a digital signal so that it can be processed by the decoder unit **1** and the CPU **9,** and subsequently said signal (suitably conditioned by the CPU **9**) is supplied to the I/Q input port of the modem **22.**

After performing the appropriate processing of the signal received from the CPU, the modem produces as an output a digital transmission signal intended to be first converted into an analogue signal (through a DAC block).

The analogue signal is then raised in frequency and subsequently amplified and/or filtered before being transmitted to the antennas **3.**

With reference to the first branch of the chain, upstream of the decoder unit **1,** the signal **s_{A}** received from the antennas is converted into a digital signal.

In practice, in this configuration the analogue signal **s_{A}** coming from the antennas **s_{A}** is first converted into a digital signal to allow the decoder unit **1** and the CPU **9** to extract all the information described above from it, then the digital signal **s_{B}** is reconverted (or recomposed) into an analogue signal **s_{A}** so that the standard modem **22** can function properly.

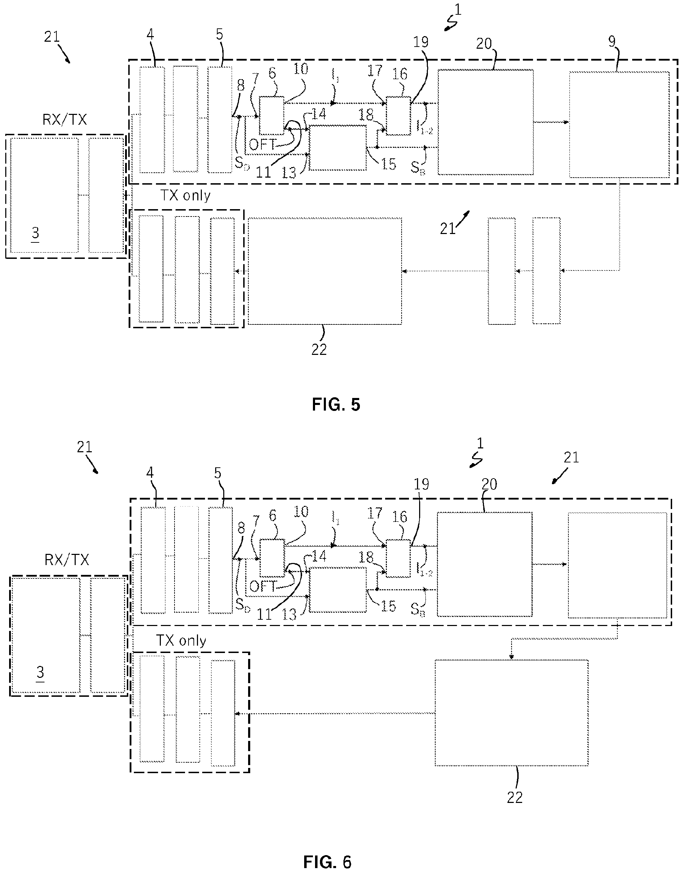

Two alternative formulations of the radio chain **21** are illustrated in **Figure 5** and **Figure 6****.**

In this case, a time-division (time division multiplexing) is applied to the signal received/transmitted by the antennas **3.**

A TX/RX switch block is connected downstream of the antennas **3** to provide alternating sequences of time intervals in which the received signal and the transmitted signal are respectively present.

Conveniently, the signal received by the antennas **3** is supplied to the first chain (where there is the decoder unit **1**), while the signal transmitted by the antennas **3** comes exclusively from the modem **22** and is applied to them according to the time division scheme.

The modem **22** shown in **Figure 4** is of the TDD type with analogue inputs/outputs, which is why the output signal from the CPU **9** must be converted into an analogue signal and raised in frequency before it reaches the modem **22.**

The blocks at the output of the modem **22,** instead, are quite similar to those shown in the diagram in **Figure 5****.**

In the diagram in **Figure 4****,** the modem **22** is of the TDD type but with digital I/Q inputs/outputs.

What has already been described above with reference to the diagram in **Figure 5** applies also in this case, with the difference that the transmitted/received signal follows the rules imposed by the time division.

As already briefly described at the beginning of the present description, the decoder unit **1** that is the subject of the present invention can be used to select, at a given time instant, the best radiation pattern of a reconfigurable antenna **3** from among those defining a predetermined set of patterns.

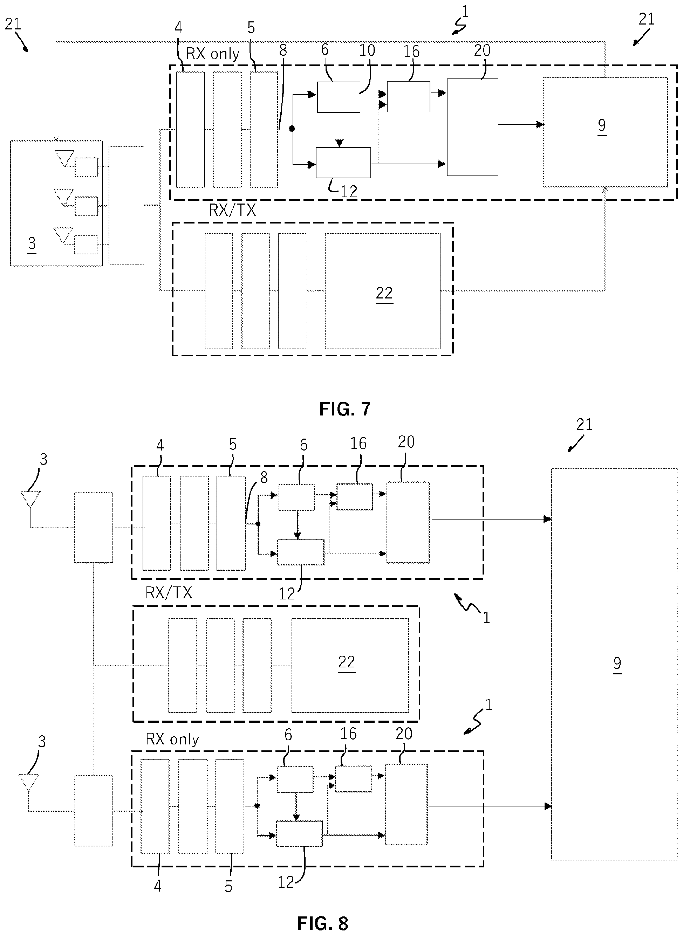

This type of application is generally referred to as *beam steering control* and is schematized in the configuration of the radio chain **21** illustrated in the diagram in **Figure 7****.**

In this example, the transmitter/receiver unit is made up of three reconfigurable antennas **3** each of which can transmit/receive an electromagnetic signal according to a specific radiation pattern belonging to a specific set.

The selection of the radiation pattern is carried out by the CPU **9** based on the information received from the decoder unit **1.**

In particular, the CPU **9** will be configured to change one or more parameters associated with the antenna **3** (for example, signal frequency, phase, power, etc.) in order to promote the operation of the same according to a given radiation pattern selected from those available.

However, in order to perform the selection of the radiation pattern of one or more antennas **3** associated to a given radio chain **21,** the CPU **9** must receive as an input, in addition to the information **I₁₋₂** generated by the decoder unit **1,** further information associated with the cell identifier to which the UE equipment is connected.

This information can be retrieved from the standard modem **22** which then will be operatively connected to the **CPU** in such a way that all the information regarding the cell identifier can be made available to the **CPU.**

Conveniently, the modem **22** can be of the type described above, that is, with TDD specification and analogue or digital I/Q inputs/outputs.

The decoder unit **1** that is the subject of the present invention can also be used to detect the geographical position of the UE device with respect to the points where the transmitting antennas **3** (generally belonging to a radio base station) are installed.

In this case, the decoder unit **1** can thus be installed in the radio chains in order to promote the geolocation of the EU.

This special configuration of the radio chain **21** is schematically shown in the diagram in **Figure 8****.**

In this case, the communication system comprises two antennas **3** of the non-reconfigurable type, that is, with a fixed radiation pattern.

Each antenna **3** is connected to a respective branch of the radio chain **21** which comprises a respective analogue-to-digital conversion block **5** and a respective decoder unit **1.**

Instead, there is only one CPU **9** connected to both the decoder units **1,** said CPU being configured to process the information **I₁₋₂** coming from the latter in such a way as to generate output data **D_{OUT}** associated with the estimated position of the UE with respect to the fixed points where the transmitting antennas are located.

In order to geolocate a UE, in addition to the information associated with the synchronization signal SSB extracted by the decoder units **1,** it is necessary to know the phase delay of the signal **s_{A}** coming from the upper antenna, indicated by number **3',** with respect to the signal **s_{A}** coming from the lower antenna, indicated by number **3".**

The calculation of the phase delay between the signal **s_{A}** received from the two antennas **3', 3"** is carried out by the CPU **9.**

In this case, each decoder unit **1** is configured to provide the CPU **9** with a portion of the analogue signal **s_{A}** coming from the antennas **3', 3"** (not previously altered or decoded).

These portions of the signal are taken in a synchronous manner, that is, they are sampled starting from a common time instant (for example, starting from the time offset **OFT** defined by the first decoder block **6** of unit **1**).

The CPU **9** can then calculate the time delay that separates the two original signals **s_{A}** coming from the antennas **3', 3"** which were sampled synchronously.

Calculating this delay will allow the CPU **9** to determine the phase delay between the analogue signal **s_{A}** received from the two antennas **3', 3"** of the communication system.

Knowing this parameter (associated with the phase delay) and the information from the first block **6** and the second block **16** of the decoder unit **1** will then allow the CPU **9** to find the position of the UE with respect to the fixed points at which the transmitting antennas are installed.

Also in this case, the modem **22** can be of the type described above, that is, with TDD specification and analogue or digital I/Q inputs/outputs.

The present invention can be carried out in other variants, all falling within the scope of the inventive features claimed and described herein; these technical features can be replaced by different technically equivalent elements and materials; the shapes and dimensions of the invention can be any, provided that they are compatible with its use.

The numbers and reference signs included in the claims and in the description are only intended to increase the clarity of the text and must not be considered as elements limiting the technical interpretation of the objects or processes identified by them.

## Claims

1. A decoder unit (**1**) for telecommunications systems, wherein the telecommunications system comprises a transmitting antenna (**2**) and at least one piece of equipment associated with a user and provided with, respectively, at least one antenna (**3**) with a reconfigurable radiation pattern selected from within a predetermined set of radiation patterns and/or two or more antennas (**3**), each having a fixed radiation pattern, said antennas (**3**) being suited to transmit/ receive a synchronization signal (**SSB**) comprising primary synchronization signals (**PSS**) and secondary synchronization signals (**SSS**), said decoder unit (**1**) comprising:
- a first decoder block (**6**) connected to the at least one antenna (**3**) of the equipment to process the modulated signal (**s_{D}**) coming from the latter and obtain first digital information (**I₁**) associated with the primary synchronization signal (**PSS**);
- a demodulator (**12**) operatively connected to the at least one antenna (**3**) of the equipment to demodulate the modulated signal (**s_{D}**) coming from the latter and obtain a demodulated signal (**s_{B}**);
- a second decoder block (**16**) suited to obtain second digital information (**I₂**) associated with the secondary synchronization signal (**SSS**);
- a CPU (**9**) suited to process said first information (**I₁**) and/or said second information (**I₂**) in such a way as to generate digital output data (**D_{OUT}**);
wherein said digital output data (**D**_{OUT}) are associated with the selection of a radiation pattern for the at least one antenna (**3**) of the equipment and/or with the position of the at least one antenna (**3**) of the equipment with respect to the transmitting antenna (**2**);
**characterized in that** said second decoder block (**16**) is positioned downstream of said first decoder block (**6**) and of said demodulator (**12**), said second information (**I₂**) being obtained by said second decoder block (**16**) following the processing of the demodulated signal (**s_{B}**) exiting from said demodulator (**12**).

2. Unit according to claim 1, **characterized in that** said first decoder block (**6**) is suited to cyclically compare the modulated signal (**s_{A}**) coming from the at least one antenna (**3**) of the equipment with a first set of reference sequences (**NS₁**).

3. Unit according to claim 2, **characterized in that** said first decoder block (**6**) is suited to generate a time reference offset signal (**OFT**) when the modulated signal (**s_{D}**) substantially coincides with one of said reference sequences (**NS₁**).

4. Unit according to claim 3, **characterized in that** said first decoder block (**6**) has an input (**7**) operatively connected to said at least one antenna (**3**) of the equipment and one pair of outputs (**10, 11**), first digital information (**I₁**) being present on one (**10**) of said outputs (**10, 11**) and being associated with the reference sequence (**NS₁**) corresponding to that present in the modulated signal (**s_{D}**) coming from the at least one antenna (**3**) of the equipment detected at the instant of time offset (**OFT**), said offset signal (**OFT**) being present on the other (**11**) of said outputs (**10,11**).

5. Unit according to one or more of the preceding claims, **characterized in that** said demodulator (**12**) has one pair of inputs (**13, 14**) and a single output (**15**), one of said inputs (**13**) being operatively connected to the at least one antenna (**3**) of the equipment to receive the modulated signal (**s_{D}**), the other input (**14**) being operatively connected to the output (**11**) of the first decoder block (**6**) to receive said offset signal (**OFT**), a signal (**s_{B}**) being present in said single output (**15**) of said demodulator (**12**) and being associated with the demodulation of the signal (**s_{D}**) coming from the at least one antenna (**3**) of the equipment, said demodulation being carried out starting from the time instant associated with the offset signal (**OFT**).

6. Unit according to claim 5, **characterized in that** said second decoder block (**16**) is suited to cyclically compare the demodulated signal (**s_{B}**) present at the output (**15**) of said demodulator (**12**) with a second set of reference signal sequences (**NS₂**).

7. Unit according to claim 5 or 6, **characterized in that** said second decoder block (**16**) comprises one pair of inputs (**17, 18**) and a single output (**19**), one of said inputs (**17**) being connected to the output (**10**) of the first decoder block (**6**) in which there is the first digital information (**I₁**) and the other input (**18**) being connected to the output (**15**) of the demodulator (**12**), the second digital information (**I₂**) being available in said single output (**19**) and being associated with the reference sequence (**NS₂**) corresponding to that present in the demodulated signal (**s_{B}**) present at the output (**15**) of said demodulator block (**12**) and detected in the instant of time offset (**OFT**).

8. Unit according to one or more of the preceding claims, **characterized in that** said CPU (**9**) is suited to control the operation of said first decoder block (**6**) and of said second decoder block (**16**) in order to process said first information (**I₁**) and said second information (**I₂**) and to generate output data (**D_{OUT}**) referred to the electrical parameters associated with the at least one antenna (**3**) of the equipment so as to selectively choose one or more radiation patterns from within the set of radiation patterns associated with the latter.

9. Unit according to one or more of the preceding claims, wherein the equipment comprises at least two non-reconfigurable antennas (**3**) with a fixed radiation pattern, **characterized in that** said CPU (**9**) is suited to compare the respective modulated signals (**s_{A}**) exiting from the antennas (**3**) to determine the phase delay between them, said CPU (**3**) being furthermore suited to process, respectively, the first information (**I₁**) generated by the first decoder block (**6**), the second information (**I₂**) associated with the second decoder block (**16**), and the information associated with the phase delay to generate output data (**D_{OUT}**) associated with the geographical position of the equipment associated with the user with respect to the transmitting antenna (**2**) of the telecommunications system.

10. Telecommunications system comprising:
- at least one transmitting station provided with at least one antenna (**2**);
- one or more pieces of equipment associated with respective users;
wherein each of said pieces of equipment comprises:
- one or more antennas (**3**) suited to transmit/receive an electromagnetic signal containing information associated with data synchronization (**SSB**), said synchronization signal comprising at least one primary synchronization signal (**PSS**) and at least one secondary synchronization signal (**SSS**);
- a converter device (**5**) suited to convert the analogue signal (**s_{A}**) exiting from said one or more antennas (**3**) into a modulated digital signal (**s_{B}**);
- a modem (**22**) suited to decode the modulated digital signal coming from said converter (**5**) into digital data sets;
- at least one decoder unit (**1**) operatively connected to said converter (**5**);
- a CPU (**9**) operatively connected, respectively, to said converter device (**5**), to said at least one decoder unit (**1**) and possibly to said modem (**22**);
wherein said at least one decoder unit (**1**) is of the type according to one or more of the preceding claims.

11. System according to claim 10, **characterized in that** said at least one decoder unit (**1**) is connected in series to said modem (**22**) downstream thereof.

12. System according to claim 11, **characterized in that** said at least one decoder unit (**1**) is connected in parallel to said modem (**22**).

## Patentansprüche

1. Decodereinheit (**1**) für Telekommunikationssysteme, wobei das Telekommunikationssystem eine Sendeantenne (**2**) und mindestens eine Ausrüstung umfasst, die einem Benutzer zugeordnet sind und jeweils mit Folgendem versehen sind: mindestens einer Antenne (**3**) mit einem rekonfigurierbaren Strahlungsmuster, das aus einem vorbestimmten Satz von Strahlungsmustern ausgewählt wird, bzw. zwei oder mehr Antennen (**3**), die jeweils ein festes Strahlungsmuster aufweisen, wobei die besagten Antennen (**3**) dazu geeignet sind, ein Synchronisationssignal (**SSB**), das primäre Synchronisationssignale (**PSS**) und sekundäre Synchronisationssignale (**SSS**) umfasst, zu senden/zu empfangen, wobei die besagte Decodereinheit (**1**) Folgendes umfasst:
- einen ersten Decoderblock (**6**), der mit der mindestens einen Antenne (**3**) der Ausrüstung verbunden ist, um das von dieser kommende modulierte Signal (**s_{D}**) zu verarbeiten und erste digitale Informationen (I**₁**) zu erhalten, die dem primären Synchronisationssignal (**PSS**) zugeordnet sind;
- einen Demodulator (**12**), der mit der mindestens einen Antenne (**3**) der Ausrüstung wirkverbunden ist, um das von dieser kommende modulierte Signal (**s_{D}**) zu demodulieren und ein demoduliertes Signal (**s_{B}**) zu erhalten;
- einen zweiten Decoderblock (**16**), der dazu geeignet ist, zweite digitale Informationen (**I₂**), die dem sekundären Synchronisationssignal (**SSS**) zugeordnet sind, zu erhalten;
- eine CPU (**9**), die dazu geeignet ist, die besagten ersten Informationen (**I₁**) bzw. die besagten zweiten Informationen (**I₂**) so zu verarbeiten, dass digitale Ausgangsdaten (**D_{OUT}**) erzeugt werden;
wobei die besagten digitalen Ausgangsdaten (**D_{OUT}**) der Auswahl eines Strahlungsmusters für die mindestens eine Antenne (**3**) der Ausrüstung bzw. der Position der mindestens einen Antenne (**3**) der Ausrüstung in Bezug auf die Sendeantenne (**2**) zugeordnet sind;
**dadurch gekennzeichnet, dass** der besagte zweite Decoderblock (**16**) dem besagten ersten Decoderblock (**6**) und dem besagten Demodulator (**12**) stromabwärts angeordnet ist, wobei die besagten zweiten Informationen (**I₂**) durch den besagten zweiten Decoderblock (**16**) nach der Verarbeitung des demodulierten Signals (**s_{B}**), das vom besagten Demodulator (**12**) ausgeht, erhalten werden.

2. Einheit nach Patentanspruch 1, **dadurch gekennzeichnet, dass** der besagte erste Decoderblock (**6**) dazu geeignet ist, das von der mindestens einen Antenne (**3**) der Ausrüstung kommende modulierte Signal (**s_{A}**) zyklisch mit einem ersten Satz von Referenzsequenzen (**NS₁**) zu vergleichen.

3. Einheit nach Patentanspruch 2, **dadurch gekennzeichnet, dass** der besagte erste Decoderblock (**6**) dazu geeignet ist, ein Zeitreferenz-Offsetsignal (**OFT**) zu erzeugen, wenn das modulierte Signal (**s_{D}**) im Wesentlichen mit einer der besagten Referenzsequenzen (**NS₁**) übereinstimmt.

4. Einheit nach Patentanspruch 3, **dadurch gekennzeichnet, dass** der besagte erste Decoderblock (**6**) Folgendes aufweist: einen Eingang (**7**), der mit der besagten mindestens einen Antenne (**3**) der Ausrüstung wirkverbunden ist, und ein Paar von Ausgängen (**10, 11**), wobei erste digitale Informationen (**I₁**) an einem (**10**) der besagten Ausgänge (**10, 11**) vorhanden sind und der Referenzsequenz (**NS₁**) zugeordnet sind, die mit derjenigen übereinstimmt, die im modulierten Signal (**s_{D}**) vorhanden ist, das von der mindestens einen Antenne (**3**) der Ausrüstung kommt und im Moment des Zeitoffsets (**OFT**) erfasst wird, wobei das besagte Offsetsignal (**OFT**) am anderen (**11**) der besagten Ausgänge (**10, 11**) vorhanden ist.

5. Einheit nach einem oder mehreren der vorhergehenden Patentansprüche, **dadurch gekennzeichnet, dass** der besagte Demodulator (**12**) ein Paar Eingänge (**13**, **14**) und einen einzigen Ausgang (**15**) aufweist, wobei einer der besagten Eingänge (**13**) mit der mindestens einen Antenne (**3**) der Ausrüstung wirkverbunden ist, um das modulierte Signal (**s_{D}**) zu empfangen, und der andere Eingang (**14**) mit dem Ausgang (**11**) des ersten Decoderblocks (**6**) wirkverbunden ist, um das besagte Offsetsignal (**OFT**) zu empfangen, wobei ein Signal (**s_{B}**) im besagten einzigen Ausgang (**15**) des besagten Demodulators (**12**) vorhanden ist und der Demodulation des Signals (**s_{D}**), das von der mindestens einen Antenne (**3**) der Ausrüstung kommt, zugeordnet ist, wobei die besagte Demodulation ab dem dem Offsetsignal (**OFT**) zugeordneten Zeitmoment durchgeführt wird.

6. Einheit nach Patentanspruch 5, **dadurch gekennzeichnet, dass** der besagte zweite Decoderblock (**16**) dazu geeignet ist, das am Ausgang (**15**) des besagten Demodulators (**12**) vorhandene demodulierte Signal (**s_{B}**) zyklisch mit einem zweiten Satz von Referenzsignalsequenzen (**NS₂**) zu vergleichen.

7. Einheit nach Patentanspruch 5 oder 6, **dadurch gekennzeichnet, dass** der besagte zweite Decoderblock (**16**) ein Paar Eingänge (**17, 18**) und einen einzigen Ausgang (**19**) umfasst, wobei einer der besagten Eingänge (**17**) mit dem Ausgang (**10**) des ersten Decoderblocks (**6**), in dem sich die ersten digitalen Informationen (**I₁**) befinden, verbunden ist, und der andere Eingang (**18**) mit dem Ausgang (**15**) des Demodulators (**12**) verbunden ist, wobei die zweiten digitalen Informationen (**I₂**) am besagten einzigen Ausgang (**19**) verfügbar sind und der Referenzsequenz (**NS₂**) zugeordnet sind, die mit derjenigen übereinstimmt, die im demodulierten Signal (**s_{B}**) vorhanden ist, das am Ausgang (**15**) des besagten Demodulatorblocks (**12**) vorhanden ist und im Moment des Zeitoffsets (**OFT**) erfasst wird.

8. Einheit nach einem oder mehreren der vorhergehenden Patentansprüche, **dadurch gekennzeichnet, dass** die besagte CPU (**9**) dazu geeignet ist, den Betrieb des besagten ersten Decoderblocks (**6**) und des besagten zweiten Decoderblocks (**16**) zu steuern, um die besagten ersten Informationen (**I₁**) und die besagten zweiten Informationen (**I₂**) zu verarbeiten und Ausgangsdaten (**D_{OUT}**) zu erzeugen, die sich auf die elektrischen Parameter beziehen, die der mindestens einen Antenne (**3**) der Ausrüstung zugeordnet sind, um ein oder mehrere Strahlungsmuster aus dem Satz von Strahlungsmustern, die dieser zugeordnet sind, selektiv auszuwählen.

9. Einheit nach einem oder mehreren der vorhergehenden Patentansprüche, wobei die Ausrüstung mindestens zwei nicht rekonfigurierbare Antennen (**3**) mit einem festen Strahlungsmuster umfasst, **dadurch gekennzeichnet, dass** die besagte CPU (**9**) dazu geeignet ist, die jeweiligen modulierten Signale (**s_{A}**), die von den Antennen (**3**) ausgehen, zu vergleichen, um die Phasenverzögerung zwischen ihnen zu bestimmen, wobei die besagte CPU (**3**) ferner dazu geeignet ist, jeweils die ersten Informationen (**I₁**), die vom ersten Decoderblock (**6**) erzeugt werden, die zweiten Informationen (**I₂**), die dem zweiten Decoderblock (**16**) zugeordnet sind, und die Informationen, die der Phasenverzögerung zugeordnet sind, zu verarbeiten, um Ausgangsdaten (**D_{OUT}**) zu erzeugen, die der geografischen Position der dem Benutzer zugeordneten Ausrüstung in Bezug auf die Sendeantenne (**2**) des Telekommunikationssystems zugeordnet sind.

10. Telekommunikationssystem, umfassend:
- mindestens eine Sendestation, die mit mindestens einer Antenne (**2**) versehen ist;
- eine oder mehrere Ausrüstungen, die den jeweiligen Benutzern zugeordnet sind;
wobei jede der besagten Ausrüstungen Folgendes umfasst:
- eine oder mehrere Antennen (**3**), die dazu geeignet sind, ein elektromagnetisches Signal zu senden/zu empfangen, das Informationen enthält, die der Datensynchronisation (**SSB**) zugeordnet sind, wobei das besagte Synchronisationssignal mindestens ein primäres Synchronisationssignal (**PSS**) und mindestens ein sekundäres Synchronisationssignal (**SSS**) umfasst;
- eine Konvertervorrichtung (**5**), die dazu geeignet ist, das von der besagten einen oder den besagten mehreren Antennen (**3**) ausgehende analoge Signal (**s_{A}**) in ein moduliertes digitales Signal (**s_{B}**) umzuwandeln;
- ein Modem (**22**), das dazu geeignet ist, das vom besagten Konverter (**5**) kommende modulierte digitale Signal in digitale Datensätze zu decodieren;
- mindestens eine Decodereinheit (**1**), die mit dem besagten Konverter (**5**) wirkverbunden ist;
- eine CPU (**9**), die jeweils mit der besagten Konvertervorrichtung (**5**), der besagten mindestens einen Decodereinheit (**1**) und gegebenenfalls mit dem besagten Modem (**22**) wirkverbunden ist;
wobei die besagte mindestens eine Decodereinheit (**1**) ein Typ gemäß einem oder mehreren der vorhergehenden Patentansprüche ist.

11. System nach Patentanspruch 10, **dadurch gekennzeichnet, dass** die besagte mindestens eine Decodereinheit (**1**) mit dem besagten Modem (**22**) stromabwärts davon in Reihe geschaltet ist.

12. System nach Patentanspruch 11, **dadurch gekennzeichnet, dass** die besagte mindestens eine Decodereinheit (**1**) mit dem besagten Modem (**22**) parallel geschaltet ist.

## Revendications

1. Unité de décodage (**1**) pour systèmes de télécommunications, où le système de télécommunications comprend une antenne d'émission (**2**) et au moins un équipement associés à un utilisateur et munis, respectivement, d'au moins une antenne (**3**) avec un diagramme de rayonnement reconfigurable choisi dans une série prédéterminée de diagrammes de rayonnement et/ou de deux ou plusieurs antennes (**3**), chacune présentant un diagramme de rayonnement fixe, lesdites antennes (**3**) étant adaptées pour transmettre/recevoir un signal de synchronisation (**SSB**) comprenant des signaux de synchronisation primaires (**PSS**) et des signaux de synchronisation secondaires (**SSS**), ladite unité de décodage (**1**) comprenant :
- un premier bloc décodeur (**6**) relié à l'au moins une antenne (**3**) de l'équipement pour traiter le signal modulé (**s_{D}**) provenant de ce dernier et obtenir une première information numérique (**I₁**) associée au signal de synchronisation primaire (**PSS**) ;
- un démodulateur (**12**) relié de manière opérationnelle à l'au moins une antenne (**3**) de l'équipement pour démoduler le signal modulé (**s_{D}**) provenant de ce dernier et obtenir un signal démodulé (**s_{B}**) ;
- un deuxième bloc décodeur (**16**) apte à obtenir la deuxième information numérique (**I₂**) associée au signal de synchronisation secondaire (**SSS**) ;
- une unité centrale de traitement (**9**) apte à traiter les premières informations (**I₁**) et/ou lesdites deuxièmes informations (**I₂**) de manière à générer des données numériques de sortie (**D_{OUT}**) ;
où lesdites données numériques de sortie (**D_{OUT}**) sont associées à la sélection d'un diagramme de rayonnement pour l'au moins une antenne (**3**) de l'équipement et/ou à la position de l'au moins une antenne (**3**) de l'équipement par rapport à l'antenne d'émission (**2**) ;
**caractérisée en ce que** ledit deuxième bloc décodeur (**16**) est positionné en aval dudit premier bloc décodeur (**6**) et dudit démodulateur (**12**), lesdites deuxièmes informations (**I**₂) étant obtenues par ledit deuxième bloc décodeur (**16**) suite au traitement du signal démodulé (**s_{B}**) sortant dudit démodulateur (**12**).

2. Unité selon la revendication 1, **caractérisée en ce que** ledit premier bloc décodeur (**6**) est apte à comparer cycliquement le signal modulé (**s_{A}**) provenant de l'au moins une antenne (**3**) de l'équipement avec une première série de séquences de référence (**NS₁**).

3. Unité selon la revendication 2, **caractérisée en ce que** ledit premier bloc décodeur (**6**) est apte à générer un signal de décalage de référence temporelle (**OFT**) lorsque le signal modulé (**s_{D}**) coïncide substantiellement avec l'une desdites séquences de référence (**NS**₁).

4. Unité selon la revendication 3, **caractérisée en ce que** ledit premier bloc décodeur (**6**) présente une entrée (**7**) reliée de manière opérationnelle à ladite au moins une antenne (**3**) de l'équipement et une paire de sorties (**10, 11**), la première information numérique (**I₁**) étant présente sur l'une (**10**) desdites sorties (**10, 11**) et étant associée à la séquence de référence (**NS₁**) correspondant à celle présente dans le signal modulé (**s_{D}**) provenant de l'au moins une antenne (**3**) de l'équipement détecté à l'instant de décalage temporel (**OFT**), ledit signal de décalage (**OFT**) étant présent sur l'autre (**11**) desdites sorties (**10, 11**).

5. Unité selon l'une ou plusieurs des revendications précédentes, **caractérisée en ce que** ledit démodulateur (**12**) présente une paire d'entrées (**13, 1**4) et une sortie unique (**15**), l'une desdites entrées (**13**) étant reliée de manière opérationnelle à la au moins une antenne (**3**) de l'équipement pour recevoir le signal modulé (**s_{D}**), l'autre entrée (**14**) étant reliée de manière opérationnelle à la sortie (**11**) du premier bloc décodeur (**6**) pour recevoir ledit signal de décalage (**OFT**), un signal (**s_{B}**) étant présent dans ladite sortie unique (**15**) dudit démodulateur (**12**) et étant associé à la démodulation du signal (**s_{D}**) provenant de l'au moins une antenne (**3**) de l'équipement, ladite démodulation étant effectuée à partir de l'instant temporel associé au signal de décalage (**OFT**).

6. Unité selon la revendication 5, **caractérisée en ce que** ledit deuxième bloc décodeur (**16**) est apte à comparer cycliquement le signal démodulé (**s_{B}**) présent à la sortie (**15**) dudit démodulateur (**12**) avec une deuxième série de séquences de signaux de référence (**NS₂**).

7. Unité selon la revendication 5 ou 6, **caractérisée en ce que** ledit deuxième bloc décodeur (**16**) comprend une paire d'entrées (**17, 18**) et une sortie unique (**19**), l'une desdites entrées (**17**) étant reliée à la sortie (**10**) du premier bloc décodeur (**6**) dans lequel se trouve la première information numérique (**I₁**) et l'autre entrée (**18**) étant reliée à la sortie (**15**) du démodulateur (**12**), la deuxième information numérique (**I₂**) étant disponible dans ladite sortie unique (**19**) et étant associée à la séquence de référence (**NS₂**) correspondant à celle présente dans le signal démodulé (**s_{B}**) présent à la sortie (**15**) dudit bloc démodulateur (**12**) et détecté dans l'instant de décalage temporel (**OFT**).

8. Unité selon l'une ou plusieurs des revendications précédentes, **caractérisée en ce que** ladite unité centrale de traitement (**9**) est apte à commander le fonctionnement dudit premier bloc décodeur (**6**) et dudit deuxième bloc décodeur (**16**) afin de traiter ladite première information (**I₁**) et ladite deuxième information (**I₂**) et de générer des données de sortie (**D_{OUT}**) se référant aux paramètres électriques associés à l'au moins une antenne (**3**) de l'équipement afin de choisir sélectivement un ou plusieurs diagrammes de rayonnement parmi la série des diagrammes de rayonnement associés à ce dernier.

9. Unité selon l'une ou plusieurs des revendications précédentes, où l'équipement comprend au moins deux antennes non reconfigurables (**3**) à diagramme de rayonnement fixe, **caractérisée en ce que** ladite unité centrale de traitement (**9**) est apte à comparer les signaux modulés respectifs (**s_{A}**) sortant des antennes (**3**) pour déterminer le retard de phase entre eux, ladite unité centrale de traitement (**3**) étant en outre apte à traiter, respectivement, la première information (**I₁**) générée par le premier bloc décodeur (**6**), la deuxième information (**I₂**) associée au deuxième bloc décodeur (**16**), et l'information associée au retard de phase pour générer des données de sortie (**D_{OUT}**) associées à la position géographique de l'équipement associé à l'utilisateur par rapport à l'antenne d'émission (**2**) du système de télécommunications.

10. Système de télécommunications comprenant :
- au moins une station d'émission pourvue d'au moins une antenne (**2**) ;
- un ou plusieurs équipements associés à des utilisateurs respectifs ;
où chacun desdits équipements comprend :
- une ou plusieurs antennes (**3**) aptes à émettre/recevoir un signal électromagnétique contenant des informations associées à la synchronisation des données (**SSB**), ledit signal de synchronisation comprenant au moins un signal de synchronisation primaire (**PSS**) et au moins un signal de synchronisation secondaire (**SSS**) ;
- un dispositif convertisseur (**5**) apte à convertir le signal analogique (**s_{A}**) sortant de ladite une ou plusieurs antennes (**3**) en un signal numérique modulé (**s_{B}**) ;
- un modem (**22**) apte à décoder le signal numérique modulé provenant dudit convertisseur (**5**) en séries de données numériques ;
- au moins une unité de décodage (**1**) connectée de manière opérationnelle audit convertisseur (**5**) ;
- une unité centrale de traitement (**9**) connectée de manière opérationnelle, respectivement, audit dispositif de conversion (**5**), à ladite au moins une unité de décodage (**1**) et éventuellement audit modem (**22**) ;
où ladite au moins une unité de décodage (**1**) est du type selon l'une ou plusieurs des revendications précédentes.

11. Système selon la revendication 10, **caractérisé en ce que** ladite au moins une unité de décodage (**1**) est reliée en série audit modem (**22**) en aval de celui-ci.

12. Système selon la revendication **11**, **caractérisé en ce que** ladite au moins une unité de décodage (**1**) est reliée en parallèle audit modem (**22**).
